# EUROPEAN PATENT SPECIFICATION

(11) **EP 2 441 705 B1**
(45) Date of publication and mention of the grant of the patent: **04.11.2015**
(21) Application number: 11185428.7
(22) Date of filing: 17.10.2011
(51) Int. Cl.: B65G 1/14

(54) **Column for the formation of transport and storage racks**
Stapelsäule für Transport- und Lagergestelle
Colonne d'empilage pour des châssis de transport et de stockage

(30) Priority: 18.10.2010 ES 201031028 U
(43) Date of publication of application: 18.04.2012
(73) Proprietor: Alambres Pamplona S.L., 31799 Ripa-Valle de Odieta (Navarra) (ES)
(72) Inventor: Mondejar Jimenez, Josefina, 31799 RIPA- Valle de Odieta (Navarra) (ES)
(74) Representative: Pons Ariño, Angel

(56) References cited:
- EP-A1- 0 613 837
- EP-A1- 1 792 853
- DE-U1- 20 216 430
- DE-U1- 29 808 971
- DE-U1-202005 013 083

## Description

### OBJECT OF THE INVENTION

The present invention belongs to the storage, packaging and transport industry, and more specifically to devices for handling and transport of flat or substantially flat materials.

The main object of the present invention is a column for the formation of racks for transport and storage of flat structure components, through which its process of loading is optimized by increasing the functional area of its swivel pallets.

### BACKGROUND OF THE INVENTION

There are currently a variety of technical solutions on the market applied to the handling, storage and transport of materials sector. Different types of forklifts, conveyor belts and transport and storage of goods devices are known, being generally used in large industrial buildings, manufacturing facilities and assembly workshops of all kinds of products. More specifically, supports or automated columns for the formation of racks are known in the market, whereby it is possible to transport and store materials and parts of a flat or substantially flat configuration.

Generally, said racks comprise a horizontal support, from which a series of columns arranged in a vertical or inclined position start. Said columns generally show a "U" configuration, and are located parallel to each other, having each of them a series of swivelling arms or pallets which are intended to hold the parts to be transported .

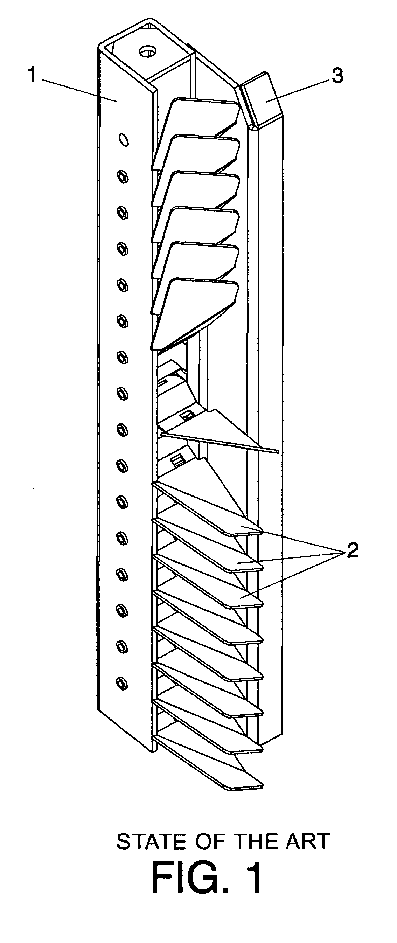

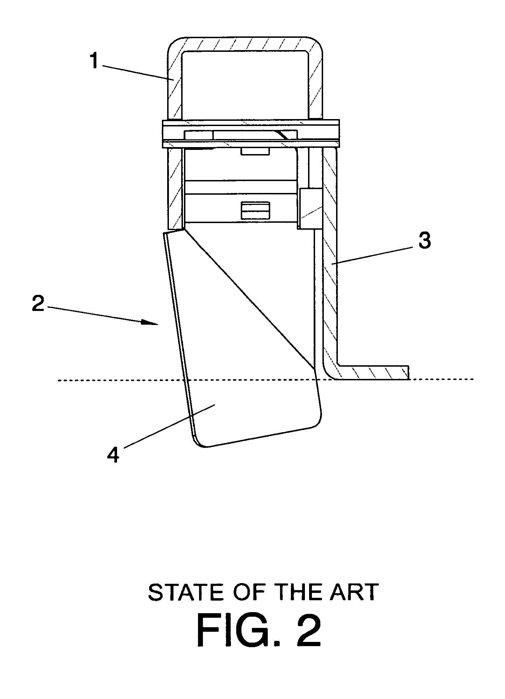

In columns in which the transverse and longitudinal inclination of the pallets is pronounced for their coupling to the inclination of the piece to store, the longitudinal angular profile attached to the body, which serves to guide the parts, should have excessive dimensions to hide the pallets at rest. This leads to the pallets, once deployed when depositing the piece, and in the middle standby position, having a very small support surface or functional area, as shown in Figures 1 and 2, which are part of the state of the art.

From the state of the art it is known document EP0613837 wherein in a storage and transportation rack for flat structural members with essentially the same format, supporting arms (6, 7, 8) mounted pivotably on carriers (1) fixed to the rack can each be pivoted individually in succession by respective pull members (15) counter to a restoring force out of a pivoted-in position of rest (A) by way of an intermediate position (B) into a supporting position (C). An identical projected dimension (a) for the front edge of the bearing surface (12) parallel to the pivot axis (5) being obtained for the intermediate position and the supporting position by parallel bending lines (10, 10', 10") which produce part surfaces angled relative to one another and relative to the bearing surface.

It is also known document DE29808971 U1 where it is described a latch lever from any materials, a control arm and a support arm in a multiple arrangement to be stacked in stacking columns for the support of parts such as body panels, polished parts, sheets of glass or the like. The support arm is equipped with an elastic shock-absorbing material at the parts where the elements to be stacked will be in contact.

### DESCRIPTION OF THE INVENTION

By means of the present invention the aforementioned drawbacks are solved by providing a column for the formation of transport and / or storage racks of flat or substantially flat components, specially adapted to expedite and improve the performance of loading processes in industrial buildings and assembly centers, resulting in a more functional area of the loading pallets which are intended to hold the parts to be transported and / or stored.

The column object of the invention shows a "U" configuration, and among its lateral branches a series of swivelling pallets, which movement is integral with each other, are located.

These swivelling pallets have a rear transition area, linked to the column by a transverse axis. Said transition zone comprises openings arranged on its surface in which attaching means, preferably transmission braces, are inserted, communicating a pallet with the pallet immediately above, so that the downward rotation of one of the pallets causes the onset of rotation of the pallet immediately above and so on, until all the pallets of the column are unfolded as the parts to be transported are placed on them.

The column for the formation of racks described herein stands out mainly because the swivelling pallets further comprise a first section connected to the transition area and placed along the longitudinal edges of the column branches, with which abuts both at the rest position and during the standby and loading of pallets position. Preferably this first section shows an approximate configuration of a right angle triangle with its edges rounded to avoid possible damages in the pieces to be stored.

In addition, linked to said first section there is a second section that has a support surface adapted dimensionally to form the base or support on which the parts to be transported will rest. This second section is slightly inclined with regard to the first section, with which it forms an obtuse angle. In addition, this second section stands out for its location on a side of the column, outwardly with regard to the vertical plane extending over the outer surface of the lateral branch of the column on said side, so that in the at rest position the pallets occupy a minimum volume of space. Preferably said support surface of the second section shows an elongated, rectangular configuration.

### DESCRIPTION OF THE DRAWINGS

To complement the description being made and in order to help better understand the features of the invention, according to a preferred practical embodiment thereof, a set of drawings is attached as an integral part of said description, wherein the following is shown as way of illustration but not limited to:
Figure 1 .- Shows a general perspective view of a vertical column incorporating a series of loading pallets, according to the state of the art.
Figure 2 .- Shows a sectioned top view of the column of Figure 1, where a very reduced support surface of the pallets is shown.
Figure 3 .- Shows a general perspective view of the column for the formation of racks object of the invention.
Figure 4 .- Shows a sectioned top view of the column object of the invention, where one of its swivelling pallets in an unfolded position is shown.
Figure 5 .- Shows a plan view of the column object of the invention, where its pallets at rest are shown being mounted on top of one another, and showing the inclination of the second section with regard to the first section of the pallets.
Figure 6 .- Shows a rack receiving pieces for storage and / or transportation, said rack being formed by three columns arranged in an inclined position.

### PREFERRED EMBODIMENT OF THE INVENTION

Figure 1 represents a vertical column (1) equipped with a series of loading pallets (2) according to the current state of the art. Said figure 1 shows that this column has a "U" configuration with an external angular piece (3) of large dimensions protruding from a side branch of the column (1), whose function is to be a stop and guide element for the pieces that will be stored as they are being deposited on the pallets (2) from a higher location.

As shown in Figure 2, the main drawback of the current loading pallets (2) is its reduced support base (4) on which the parts will rest, which creates problems of stability and security for said parts . Also, the location of the pallets (2) in the same vertical plane of the column (1) results in the pallets (2) occupying a considerable volume of space at the rest position.

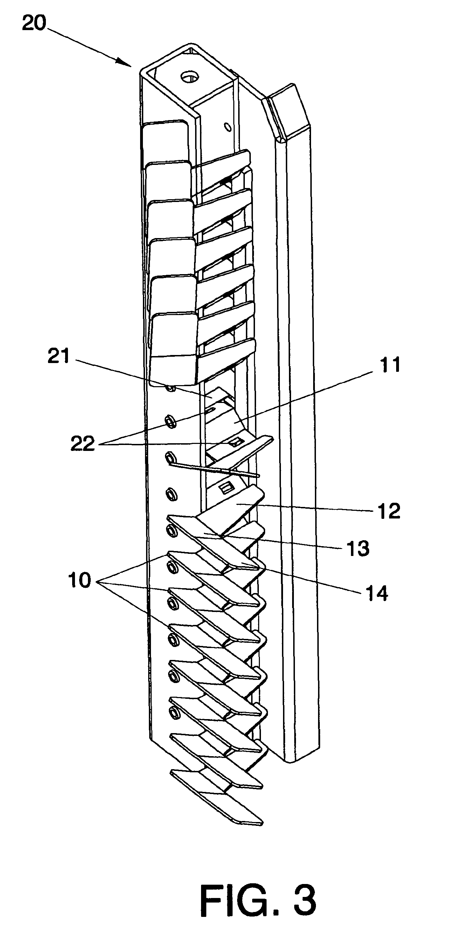

As it can be seen in the preferred embodiment shown in Figure 3, the column (20) object of the invention is of the type comprising a series of swivelling pallets (10) connected to the column through transverse shafts (21). These pallets (10) are interconnected by transmission braces, not shown, introduced in openings (22) existing in a rear transition zone (11) of each of the pallets (10), so that the downward rotation of one of the pallets (10), causes the onset of rotation of the pallet (10) immediately above.

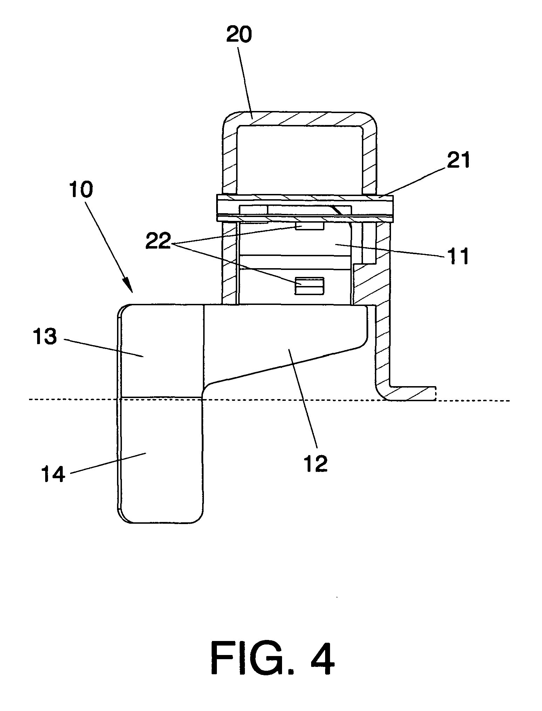

Figure 4 shows that the column (20) of the present invention stands out mainly because its swivelling blades (10) further comprise:
- A first section (12) of an approximate configuration of a right angle triangle linked to the transition zone (11) and arranged along the longitudinal edges of the column (20), with which said first section (12) abuts both at the resting position of the pallets (10) and at the standby and loading position, and
- A second section (13) which has a support surface (14) of an elongated, rectangular configuration, dimensionally adapted to form the support base of the pieces to be transported, being the second section (13) slightly inclined with regard to the first section (12) forming an obtuse angle, and said second section (13) being located outwardly with regard to the vertical plane of the column (20).

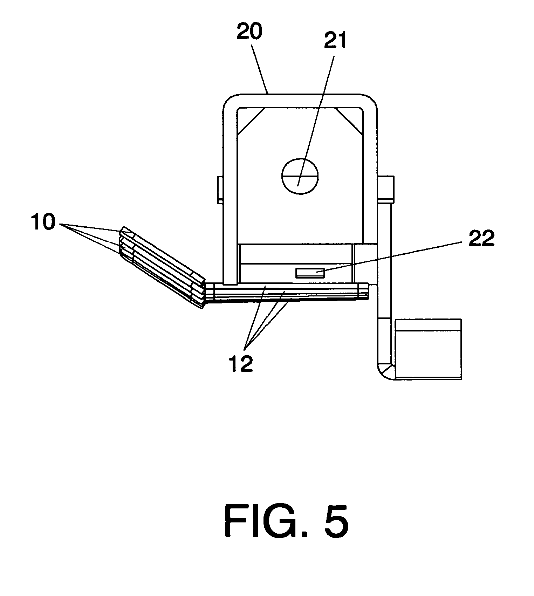

Figure 5 shows a top view of a column (20) that incorporates the swivelling pallets (10) of the invention. Said figure 5 shows an arrangement of the pallets (10) at rest, where the pallets (10) are mounted one on top of another occupying minimum space, and requiring shorter length of the external angular piece of the column (20).

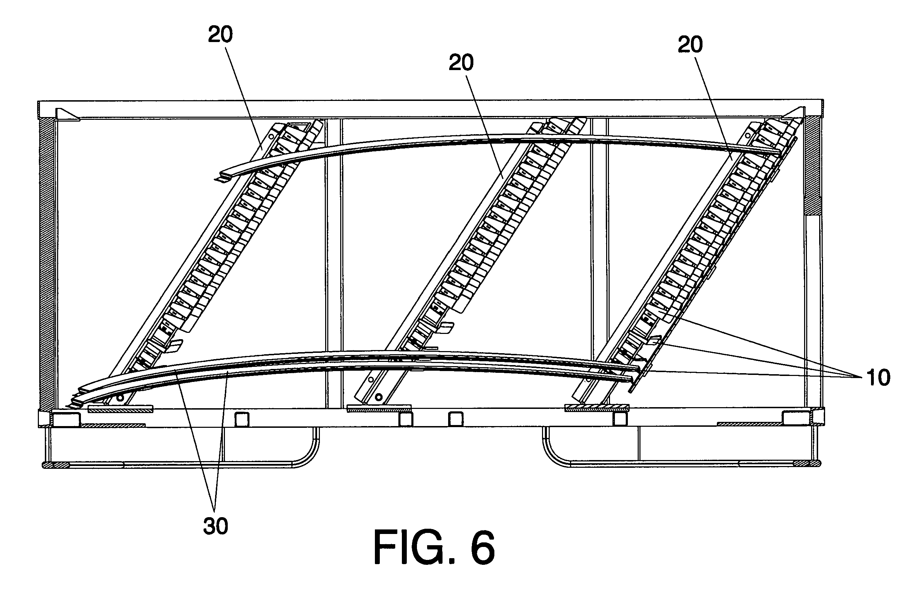

Finally, Figure 6 shows a rack that has three columns (20) arranged at an angle for a perfect coupling of its pallets (10) with the inclinations of the parts (30) to be transported, which are substantially flat, such as vehicle doors, parts of the aircraft fuselage, and so on. Said figure 6 shows some parts (30) being received by the swivelling pallets (10) for subsequent transport and / or storage.

## Claims

1. Column (20) for the formation of racks for transport and / or storage of flat or substantially flat parts (30), said column showing a U-configuration comprising lateral branches, wherein an external angular piece (3) protrudes from one of said lateral branches, whose function is to be a stop and guide element for the parts (30) that will be stored, said column further comprising among its lateral branches a series of swivelling pallets (10) having each a rear transition zone (11) linked to the column (20) by transverse axis (21), said pallets (10) being jointly interconnected through connecting means introduced in openings (22) located in said rear transition zone (11) of each of the pallets (10), so that the downward rotation of one of the pallets (10) causes the onset of rotation of the pallet (10) immediately above and so on, until all the pallets (10) of the column (20) are unfolded as the parts (30) to be transported are placed on them, the swivelling pallets (10) further comprising:
- a first section (12) linked to the transition zone (11) arranged along the longitudinal edges of the column branches, with which said first section (12) abuts both at the resting position of the pallets (10) and at the standby and loading position and
- a second section (13) linked to said first section (12), being the second section (13) slightly inclined with regard to the first section (12), with which it forms an obtuse angle,
**characterized in that** said second section (13) is located on a side of the column (20) outwardly with regard to the vertical plane extending over the outer surface of the lateral branch of the column (20) on said side, which is opposite to the lateral branch of the column comprising the external piece (3), and **in that** the second section (13) is provided with a support surface (14), dimensionally adapted to form the support base of the parts to be transported, which extends in the downwardly rotate position of the swivelling pallet (10) beyond the external piece (3) in the direction of the branches of the U-shaped column (20) and away therefrom, wherein the dimension of the first section (12) is such that the first section (12) does not extend beyond the external piece (3) in the downwardly rotate position of the swivelling pallet (10).

2. Column (20) for the formation of racks for transport and / or storage, according to claim 1, **characterized in that** the first section (12) shows an approximate configuration of a right angle triangle with rounded edges to prevent possible damage to the parts (30) to be transported and / or stored.

3. Column (20) for the formation of racks for transport and / or storage, according to any one of claims 1 to 2, **characterized in that** the support surface (14) which is intended to support the parts (30) to be transported shows an elongated, rectangular configuration.

4. Column (20) for the formation of racks for transport and / or storage, according to any one of claims 1 to 3, **characterized in that** the connecting means among pallets (10) comprise transmission braces.

## Patentansprüche

1. Säule (20) zur Bildung von Transport- und/oder Lagergestellen für flache oder im Wesentlichen flache Teile (30), wobei diese Säule eine U-förmige, seitliche Arme umfassende Ausführung aufweist, wobei ein externes Winkelstück (3) aus einem dieser seitlichen Arme herausragt, dessen Funktion es ist, als Anschlag und Führungselement der zu lagernden Teile (30) zu dienen, wobei die Säule weiterhin inmitten ihrer seitlichen Arme eine Reihe schwenkbarer Paletten (10) umfasst, die jeweils eine hintere Übergangszone (11) besitzen, die mit einer Querachse (21) mit der Säule (20) verbunden ist, wobei diese Paletten (10) mittels Verbindungsmitteln gemeinsam miteinander verbunden sind, die in Öffnungen (22) eingeführt sind, die sich in dieser hinteren Übergangszone (11) jeder Palette (10) befinden, sodass die Drehung in Abwärtsrichtung einer der Paletten (10) den Start der Drehung der direkt darüber befindlichen Palette (10) usw. verursacht, bis alle Paletten (10) der Säule (20) offengelegt sind, während die zu transportierenden Teile (30) auf diesen platziert werden, wobei die schwenkbaren Paletten (10) weiterhin Folgendes umfassen:
- einen ersten, mit der Übergangszone (11) verbundenen Abschnitt (12), der entlang der Längskanten der Säulenarme angeordnet ist, mit denen dieser erste Abschnitt (12) sowohl an die Ruheposition der Paletten (10) als auch an die Standby- und Ladeposition anstößt; und
- einen zweiten, mit diesem ersten Abschnitt (12) verbundenen Abschnitt (13), wobei der zweite Abschnitt (13) gegenüber dem ersten Abschnitt (12) leicht geneigt ist und mit diesem einen stumpfen Winkel bildet,
**dadurch gekennzeichnet, dass** dieser zweite Abschnitt (13) sich an einer Seite der Säule (20) befindet, die in Bezug auf die vertikale Ebene außen liegt, die sich über die Außenfläche der seitlichen Arms der Säule (20) dieser Seite erstreckt, die sich gegenüber des seitlichen Arms der Säule befindet, die den externen Teil (3) umfasst, und dass der zweite Abschnitt (13) mit einer Stützfläche (14) ausgestattet ist, deren Abmessungen dazu ausgelegt sind, die Stützgrundfläche der zu transportierenden Teile zu bilden, und die sich in der in Abwärtsrichtung drehenden Position der schwenkbaren Palette (10) über das externe Teile (3) in der Richtung der Arme der U-förmigen Säule (20) und von diesen weg erstreckt, wobei die Abmessungen des ersten Abschnitts (12) so bemessen sind, dass der erste Abschnitt (12) sich nicht über den externen Teil (3) in der in Abwärtsrichtung drehenden Position der schwenkbaren Palette (10) erstreckt.

2. Säule (20) zur Bildung von Transport- und/oder Lagergestellen nach Anspruch 1, **dadurch gekennzeichnet, dass** der erste Abschnitt (12) die ungefähre Ausführung eines rechtwinkligen Dreiecks mit abgerundeten Ecken aufweist, um eine mögliche Beschädigung der zur transportierenden und/oder zu lagernden Teile (30) zu verhindern.

3. Säule (20) zur Bildung von Transport- und/oder Lagergestellen nach jedem der Ansprüche 1 bis 2, **dadurch gekennzeichnet, dass** die Stützfläche (14), die zur Stützung der zu transportierenden Teile (30) vorgesehen ist, eine längliche, rechteckige Ausführung aufweist.

4. Säule (20) zur Bildung von Transport- und/oder Lagergestellen nach jedem der Ansprüche 1 bis 3, **dadurch gekennzeichnet, dass** die Verbindungsmittel zwischen Paletten (10) Übertragungsklammern umfassen.

## Revendications

1. Colonne (20) pour la formation de châssis de transport et/ou stockage de pièces plates ou substantiellement plates (30), ladite colonne présentant une configuration en U comprenant des branches latérales, dans laquelle une pièce angulaire externe (3) dépasse de l'une desdites branches latérales, dont la fonction est d'être un élément d'arrêt et de guidage pour les pièces (30) qui seront stockées, ladite colonne comprenant en outre parmi ses branches latérales une série de palettes pivotantes (10) possédant chacune une zone arrière de transition (11) reliée à la colonne (20) par des axes transversaux (21), lesdites palettes (10) étant conjointement interconnectées par des moyens de connexion introduits dans des ouvertures (22) situées dans ladite zone arrière de transition (11) de chacune des palettes (10), pour que la rotation vers le bas de l'une des palettes (10) provoque le début de la rotation de la palette (10) située immédiatement au-dessus et ainsi de suite, jusqu'à ce que toutes les palettes (10) de la colonne (20) soient dépliées lorsque les pièces (30) devant être transportées sont placées sur elles, les palettes pivotantes (10) comprenant en outre :
- une première section (12) reliée à la zone de transition (11) disposée le long des bords longitudinaux des branches de colonne, auxquelles ladite première section (12) est adjacente aussi bien dans la position de repos des palettes (10) que dans la position d'attente et de chargement et
- une seconde section (13) reliée à ladite première section (12), la seconde section (13) étant légèrement inclinée par rapport à la première section (12), avec laquelle elle forme un angle obtus,
**caractérisée en ce que** ladite seconde section (13) est située d'un côté de la colonne (20) vers l'extérieur par rapport au plan vertical s'étendant sur la surface externe de la branche latérale de la colonne (20) sur ledit côté, qui est en face de la branche latérale de la colonne comprenant la pièce externe (3), et **en ce que** la seconde section (13) est munie d'une surface de support (14), dont les dimensions sont adaptées pour former la base de support des pièces devant être transportées, qui s'étend dans la position de rotation vers le bas de la palette pivotante (10) au-delà de la pièce externe (3) dans le sens des branches de la colonne en U (20) et à distance de cette dernière, dans laquelle la dimension de la première section (12) est telle que la première section (12) ne s'étend pas au-delà de la pièce externe (3) dans la position de rotation vers le bas de la palette pivotante (10).

2. Colonne (20) pour la formation de châssis de transport et/ou stockage, selon la revendication 1, **caractérisée en ce que** la première section (12) présente une configuration approximative d'un triangle à angle droit avec des bords arrondis pour prévenir d'éventuels dommages sur les pièces (30) devant être transportées et/ou stockées.

3. Colonne (20) pour la formation de châssis de transport et/ou stockage, selon n'importe laquelle des revendications 1 à 2, **caractérisée en ce que** la surface de support (14) qui est destinée à soutenir les pièces (30) devant être transportées présente une configuration allongée, rectangulaire.

4. Colonne (20) pour la formation de châssis de transport et/ou stockage, selon n'importe laquelle des revendications 1 à 3, **caractérisée en ce que** les moyens de connexion parmi les palettes (10) comprennent des renforts de transmission.
